# EUROPÄISCHE PATENTSCHRIFT

(11) **EP 3 314 136 B1**
(45) Veröffentlichungstag und Bekanntmachung des Hinweises auf die Patenterteilung: **10.07.2019**
(21) Anmeldenummer: 16724842.6
(22) Anmeldetag: 26.04.2016
(51) Int. Cl.: F16C 33/76, F16C 35/063, B61F 15/22, F16C 19/38

(54) **WÄLZLAGEREINHEIT**
ROLLING-ELEMENT BEARING UNIT
UNITÉ DE PALIER À ROULEMENT

(30) Priorität: 29.06.2015 DE 102015212067
(43) Veröffentlichungstag der Anmeldung: 02.05.2018
(73) Patentinhaber: Schaeffler Technologies AG & Co. KG, 91074 Herzogenaurach (DE)
(72) Erfinder: MARQUARDT, Christoph, 97493 Bergrheinfeld (DE)
(86) Internationale Anmeldenummer: PCT/DE2016/200197
(87) Internationale Veröffentlichungsnummer: WO 2017/000937

(56) Entgegenhaltungen:
- WO-A1-03/095856
- WO-A1-2006/094031
- CH-A- 360 551
- DE-A1- 4 222 852
- JP-A- H11 321 211

## Beschreibung

Die Erfindung betrifft eine Wälzlagereinheit für Schienenfahrzeuge, umfassend einen ein- oder mehrteiligen Lagerinnenring, einen Lageraußenring, zwischen den Lagerringen angeordnete Wälzkörper und mindestens ein ringförmiges Halteelement mit einer gleichbleibenden Breite B des Haltelements in axialer Richtung, wobei der Lagerinnenring und das Halteelement auf einer Radsatzwelle angeordnet sind und das Halteelement radial zwischen einem axialen Ende des Lagerinnenrings und der Radsatzwelle sowie radial zwischen einem an der Stirnseite des Lagerinnenrings anliegenden Anlageteil und der Radsatzwelle angeordnet ist. Die Erfindung betrifft weiterhin eine Radsatzwelle eines Schienenfahrzeugs mit einer solchen Wälzlagereinheit.
Eine Wälzlagereinheit für Schienenfahrzeuge umfasst in der Regel ein Wälzlager mit einem Lagerinnenring, einem Lageraußenring und dazwischen angeordnete Wälzkörper, wobei das Wälzlager an einem Ende einer Radsatzwelle aufgebracht ist. An der Stirnseite der Radsatzwelle ist eine Endkappe angeordnet, die die Stirnseite der Radsatzwelle komplett umschließt. Die Endkappe liegt an der Stirnseite des Lagerinnenrings des Wälzlagers an. An der anderen Stirnseite des Lagerinnenrings ist ebenfalls direkt anliegend ein Stützring angeordnet.

Jedoch weist die Radsatzwelle im Betrieb eine hohe Umlaufbiegung auf, so dass zwischen Lagerinnenring und Stützring sowie Lagerinnenring und Endkappe ein Spalt entsteht, der sich bei jeder Umdrehung einmal schließt und wieder öffnet. Durch diesen Spalt dringen Flüssigkeiten, wie zum Beispiel Regen, Spritzwasser, Öle und so weiter, in den Raum zwischen Wälzlager und Radsatzwelle ein. Die dort angesammelten Flüssigkeiten können zu einer Korrosion der Welle führen.

In der WO 2006/094031 A1 ist eine Wälzlagereinheit mit einem Halteclip offenbart. Die Wälzlagereinheit wird auf die Radsatzwelle montiert. Der Halteclip verbindet den Stützring mit dem Lagerinnenring vor und während der Montage und schafft nach der Montage eine Flüssigkeitsbarriere. Die Flüssigkeitsbarriere wird dadurch geschaffen, dass der Halteclip an jedem seiner Enden eine ringförmige Rippe aufweist, die radial nach außen gerichtet ist.

Die CH 360 551 A beschreibt einen Dichtungsring für Nadellager bei Kreuzgelenken aus einem gummielastischen Werkstoff mit zwei Dichtlippen, an welchen ein Laufring anvulkanisiert ist.

Die JP H11 321211 A offenbart eine zweireihige Lagereinheit für PKW-Radlager mit zwei Innenringen. Zwischen den Innenringen ist ein Dichtelement vorhanden, um ein Eindringen von Wasser in die Lagereinheit zu verhindern. Dabei ist unter anderem ein U-förmiger Ring vorgesehen, in welchen ein Dichtring eingelegt ist.

Die DE 42 22 852 A1 beschreibt eine Wälzlagereinheit aus einer oder mehreren Wälzkörperreihen mit mindestens zwei Innenringteilen, die durch einen Verbindungsring zusammengehalten werden. Der Verbindungsring ist aus einem elastischen Werkstoff gebildet und weist Vorsprünge sowie einen umlaufenden Wulst auf. Der Verbindungsring greift in umlaufende Ausnehmungen der Innenringteile ein.

Die WO 03/095856 A1 offenbart eine statische Dichtung zwischen einem Lagerring und einer Welle. Die Dichtung weist ein ringförmiges Dichtelement mit metallischer Einlage und mit einem elastischen Vorsprung zum Einschnappen in eine ringförmige Aussparung des Lagers auf.

Aufgabe der vorliegenden Erfindung ist es demnach, eine Wälzlagereinheit gegenüber dem Stand der Technik weiterzuentwickeln und zu verbessern und eine damit ausgestattete Radsatzwelle anzugeben.

Zur Lösung der erfindungsgemäßen Aufgabe betreffend die Wälzlagereinheit wird die im Anspruch 1 angegebene Wälzlagereinheit vorgeschlagen. Optionale vorteilhafte Ausgestaltungen der Erfindung ergeben sich ganz oder teilweise aus den abhängigen Ansprüchen.
Die erfindungsgemäße Wälzlagereinheit umfasst einen ein- oder mehrteiligen Lagerinnenring, einen Lageraußenring, zwischen den Lagerringen angeordnete Wälzkörper und mindestens ein ringförmiges Halteelement mit einer gleichbleibenden Breite B des Haltelements in axialer Richtung, wobei der Lagerinnenring und das Halteelement auf einer Radsatzwelle angeordnet sind und das Halteelement radial zwischen einem axialen Ende des Lagerinnenrings und der Radsatzwelle sowie radial zwischen einem an der Stirnseite des Lagerinnenrings anliegenden Anlageteil und der Radsatzwelle angeordnet ist. Die Wälzlagereinheit zeichnet sich dadurch aus, dass an dem Halteelement mindestens ein Dichtelement befestigt ist, wobei das Halteelement und das Dichtelement aus unterschiedlichen Materialien bestehen. Weiterhin weist das Halteelement an beiden axialen Enden eine Schnappkontur auf, die aus einer Vielzahl an Erhebungen besteht, wobei sich die Erhebungen von einem Außendurchmesser D_{A} des Halteelements aus in radialer Richtung erstrecken.

Das Dichtelement kann hierbei als Band ausgebildet sein und eine Ringform aufweisen. Statt eines einzelnen umlaufenden Dichtelements ist die Verwendung mehrerer abschnittsweise ringförmiger Dichtelemente denkbar. Vorzugsweise ist das Dichtelement des Weiteren, insbesondere axial mittig, auf der radialen Außenseite des Halteelements angeordnet. Das Dichtelement verhindert das Eindringen von beispielsweise Flüssigkeiten in den Raum zwischen Radsatzwelle und Lagerinnenring. Der Lagerinnenring kann einteilig oder mehrteilig ausgebildet sein.

Das Halteelement ist ringförmig ausgebildet und weist an beiden axialen Enden eine Schnappkontur auf. Das bedeutet, dass Erhebungen, beispielsweise Schnappnasen, auf dem Außendurchmesser an beiden axialen Enden des Halteelements angeordnet sind. Die Schnappnasen sind dabei in Umlaufrichtung segmentiert ausgeführt. Des Weiteren ist es vorteilhaft, wenn die Schnappnasen an beiden Enden in Umlaufrichtung versetzt angeordnet sind. Zweckmäßig ist es, wenn der Abstand zwischen zwei Schnappnasen in Umlaufrichtung so groß ist wie die Länge der Schnappnasen in Umfangsrichtung selbst.

Des Weiteren ist es vorteilhaft, wenn der Lagerinnenring eine zur Schnappkontur des Halteelements korrespondierende Kontur aufweist. Durch die Schnappkontur des Halteelements und der dazu korrespondierenden Kontur am Innendurchmesser des Lagerinnenrings wird die Montage der Wälzlagereinheit auf der Radsatzwelle vereinfacht.

Ferner weist das Anlageteil eine zur Schnappkontur des Halteelements korrespondierende Kontur auf. Unter Anlageteil wird jegliches Element verstanden, das an einer Stirnseite des Lagerinnenrings direkt anliegt. Das Anlageteil kann dabei beispielsweise als Anlagering, oft auch Stützring genannt, oder als Endkappe ausgebildet sein.

Durch die Schnappkonturen wird der Lagerinnenring mit einem Anlageteil verbunden. Das heißt, dass das Halteelement eine reine Haltefunktion hat. Das auf dem Halteelement angeordnete Dichtelement hingegen hat eine reine Dichtfunktion. Obwohl der Raum bei Wälzlagereinheiten begrenzt ist, können erfindungsgemäß beide Funktionselemente eingebaut werden.

Zur Lösung der erfindungsgemäßen Aufgabe betreffend die Radsatzwelle wird die in Anspruch 10 angegebene Radsatzwelle vorgeschlagen. Die erfindungsgemäße Radsatzwelle eines Schienenfahrzeugs ist mit einer erfindungsgemäßen Wälzlagereinheit ausgebildet, wobei zwei Halteelemente auf der Radsatzwelle angeordnet sind, und wobei jeweils ein Halteelement an einem axialen Ende des ein- oder mehrteiligen Lagerinnenrings angeordnet ist.
Das bedeutet, dass die zwei Halteelemente den Lagerinnenring insbesondere mit jeweils einem Anlageteil verbinden und die auf den Halteelementen befestigten Dichtelemente den Raum zwischen Lagerinnenring und Radsatzwelle abdichten.

Das Halteelement und das Dichtelement bestehen aus unterschiedlichen Werkstoffen. Das Halteelement besteht beispielsweise aus Kunststoff, insbesondere PA66GF25. Das Dichtelement hingegen besteht beispielsweise aus Naturkautschuk.

Des Weiteren ist es bevorzugt, wenn die Wälzkörper in zwei Reihen angeordnet sind. Vorzugsweise handelt es sich um ein zweireihiges Kegelrollenlager in O-Anordnung. Beispielsweise können aber auch Zylinderrollenlager oder Pendelrollenlager verwendet werden. Das Wälzlager kann auf der Radsatzwelle mittels einer Pressverbindung angeordnet sein. Die Radsatzwelle kann als Voll- oder als Hohlwelle ausgebildet sein.

Weitere Einzelheiten, Merkmale, Merkmalskombinationen und Wirkungen auf der Basis der Erfindung ergeben sich aus der nachfolgenden Beschreibung bevorzugter, beispielhafter Ausführungsformen der Erfindung sowie aus den Zeichnungen. Diese zeigen in:
- Figur 1: eine beispielhafte Ausführungsform einer Wälzlagereinheit mit zwei Halteelementen in Schnittansicht,
- Figur 2: eine beispielhafte Ausführungsform eines Halteelements mit Dichtelement,
- Figur 3: das Halteelement aus Fig. 2 ohne Dichtelement,
- Figur 4: das Halteelement aus Fig. 2 in Schnittansicht,
- Figur 5: vergrößerte Darstellung einer Schnappkontur des Halteelements mit Dichtelement.

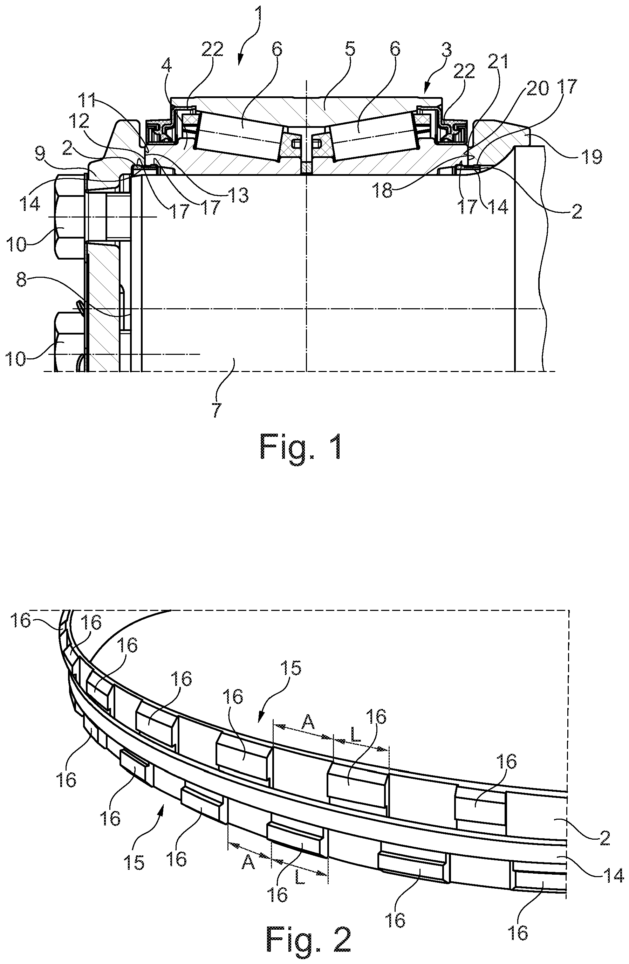

In der **Fig. 1** ist eine beispielhafte Ausführungsform einer Wälzlagereinheit **1** mit zwei Halteelementen **2** in Schnittansicht dargestellt. Die dargestellte Wälzlagereinheit **1** umfasst ein Wälzlager **3** und zwei Halteelemente **2.** Das Wälzlager **3** weist einen mehrteiligen Lagerinnenring **4,** einen einteiligen Lageraußenring **5** sowie radial zwischen beiden Lagerringen **4, 5** eine Vielzahl an Wälzkörpern **6** in zwei Reihen auf.

Das Wälzlager **3** ist in dieser Ausführungsform als zweireihiges Kegelrollenlager in O-Anordnung ausgebildet.

Der mehrteilige Lagerinnenring **4** ist an einem Ende einer Radsatzwelle **7** aufgepresst, wobei die Radsatzwelle **7** als Vollwelle ausgebildet ist. Die Stirnseite **8** der Radsatzwelle **7** ist von einer Endkappe **9** komplett umschlossen. Die Endkappe **9** ist mittels mehreren axial verlaufenden Befestigungselementen **10**, in dieser Ausführung mittels Schrauben, mit der Radsatzwelle **7** drehfest verbunden. Die Stirnseite **11** der Endkappe **8**, die in Richtung Wälzlagereinheit **1** gerichtet ist, liegt an der Stirnseite **12** des Lagerinnenrings **4** an, so dass beide Stirnseiten **11**, **12** eine Kontaktfläche **13** bilden. Radial zwischen der Kontaktfläche **13** und der Radsatzwelle **7** ist ein Halteelement **2** mit einem Dichtelement **14** angeordnet. Das Halteelement **2** ist mittig zur Kontaktfläche **13** ausgerichtet.

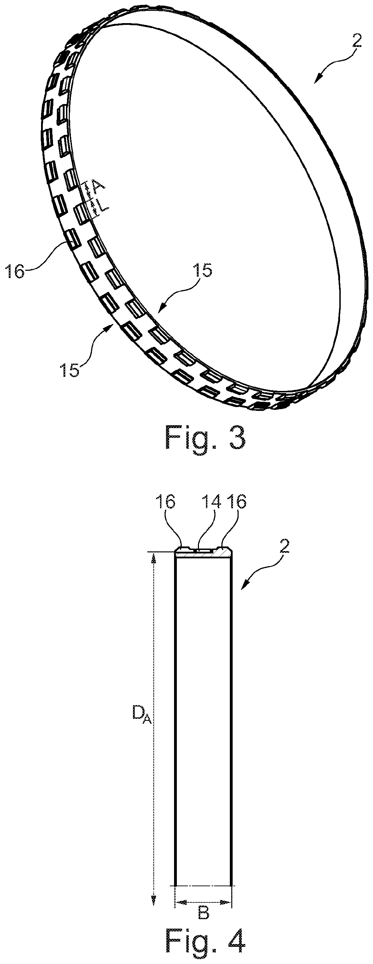

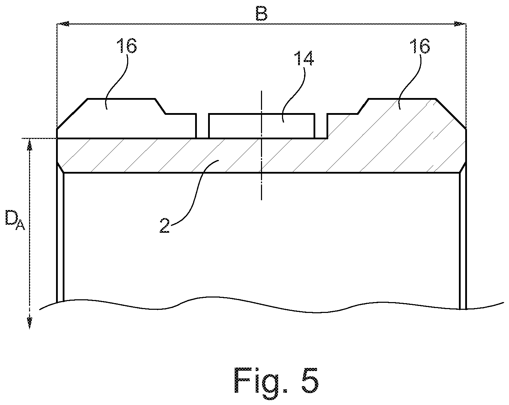

In den **Fig. 2** bis **Fig. 5** ist eine beispielhafte Ausführungsform eines Halteelements **2** in verschiedenen Ansichten dargestellt, wobei in **Fig. 3** das Halteelement **2** ohne Dichtelement **14** ausgeführt ist. Das Halteelement **2** ist ringförmig ausgebildet und weist eine Schnappkontur **15** an beiden axialen Enden auf. Die Schnappkontur **15** besteht aus einer Vielzahl an Erhebungen **16**, wobei sich die Erhebungen **16** vom Außendurchmesser **D_{A}** des Halteelements **2** aus in radialer Richtung erstrecken. Des Weiteren erstrecken sich die Erhebungen **16** in axialer Richtung über ein Drittel der Breite **B** des Halteelements **2**. Die Schnappkontur **15** ist demnach an beiden Enden segmentiert. Der Abstand **A** in Umfangsrichtung zwischen zwei nacheinander angeordneten Erhebungen **16** ist immer gleich und entspricht der Länge **L** einer Erhebung **16** in Umfangsrichtung. Die Schnappkonturen **15** an beiden axialen Enden des Halteelements **2** sind zueinander um die Länge **L** in Umfangsrichtung versetzt. Axial mittig auf dem Außendurchmesser **D_{A}**, das heißt auf der radialen Außenseite, des Halteelements **2** ist ein Dichtelement **14** in Umfangsrichtung angeordnet. Das Dichtelement **14** ist als ringförmiges Band ausgebildet, das sich im Vergleich zu den Erhebungen **16** geringer in radialer Richtung erstreckt. Das bedeutet, dass das Dichtelement **14** nicht an der Radsatzwelle **7** anliegt und die Abdichtungsfläche nach außen hin gerichtet ist.

Der Lagerinnenring **4** sowie die Endkappe **9** weisen am jeweiligen Innendurchmesser eine zur Schnappkontur **15** des Halteelements **2** korrespondierende Kontur auf. Die Kontur ist als umlaufende Nut **17** ausgebildet, in diese die Erhebungen **16** des Halteelements **2** einschnappen oder eingreifen. Das Dichtelement **14** verhindert dabei das Eindringen von Flüssigkeiten durch einen eventuell vorliegenden Spalt an der Kontaktfläche **13**.

An der anderen Stirnseite **18** des Lagerinnenrings **4** ist ein Stützring **19** angeordnet, dessen Stirnseite **20** an der Stirnseite **18** des Lagerinnenrings **4** direkt anliegt, so dass ebenfalls eine Kontaktfläche **21** entsteht. Auch hier ist radial zwischen der Radsatzwelle **7** und der Kontaktfläche **21** ein Halteelement **2** und ein Dichtelement **14** angeordnet, das mittig zur Kontaktfläche **21** ausgerichtet ist. Dafür ist auch am Innendurchmesser des Lagerinnenrings **4** sowie am Innendurchmesser des Stützrings **19** jeweils eine umlaufende Nut **17** vorgesehen, die eine Kontur aufweist, die mit der jeweiligen Schnappkontur **15** des Halteelements **2** korrespondiert. Die Dichtelemente **14** des jeweiligen Halteelements **2** verhindern dabei das Eindringen von Flüssigkeiten in den Raum zwischen Lagerinnenring **4** und Radsatzwelle **7** durch die Kontaktflächen **13, 21**.

Das Wälzlager **3** ist des Weiteren mit zwei Dichtungen **22** zum nicht dargestellten Lagergehäuse abgedichtet.

### Bezugszeichenliste

- 1: Wälzlagereinheit
- 2: Halteelement
- 3: Wälzlager
- 4: Lagerinnenring
- 5: Lageraußenring
- 6: Wälzkörper
- 7: Radsatzwelle
- 8: Stirnseite der Radsatzwelle
- 9: Endkappe
- 10: Befestigungselement
- 11: Stirnseite der Endkappe
- 12: Erste Stirnseite des Lagerinnenrings
- 13: Kontaktfläche zwischen Lagerinnenring und Endkappe
- 14: Dichtelement
- 15: Schnappkontur
- 16: Erhebung
- 17: Umlaufende Nut
- 18: Zweite Stirnseite des Lagerinnenrings
- 19: Stützring
- 20: Stirnseite des Stützrings
- 21: Kontaktfläche zwischen Lagerinnenring und Stützring
- 22: Lagerdichtung

- A: Abstand zwischen Erhebungen in Umfangsrichtung
- B: Breite des Halteelements in axialer Richtung
- D_{A}: Außendurchmesser des Halteelements
- L: Länge der Erhebungen in Umfangsrichtung

## Patentansprüche

1. Wälzlagereinheit (1) für Schienenfahrzeuge, umfassend einen ein- oder mehrteiligen Lagerinnenring (4), einen Lageraußenring (5), zwischen den Lagerringen (4, 5) angeordnete Wälzkörper (6) und mindestens ein ringförmiges Halteelement (2) mit einer gleichbleibenden Breite (B) des Haltelements (2) in axialer Richtung, wobei der Lagerinnenring (4) und das Halteelement (2) auf einer Radsatzwelle (7) angeordnet sind und das Halteelement (2) radial zwischen einem axialen Ende des Lagerinnenrings (4) und der Radsatzwelle (7) sowie radial zwischen einem an der Stirnseite (12, 18) des Lagerinnenrings (4) anliegenden Anlageteil (9, 19) und der Radsatzwelle (7) angeordnet ist, wobei an dem Halteelement (2) mindestens ein Dichtelement (14) befestigt ist, wobei das Halteelement (2) und das Dichtelement (14) aus unterschiedlichen Materialien bestehen, und wobei das Halteelement (2) an beiden axialen Enden eine Schnappkontur (15) aufweist, die aus einer Vielzahl an Erhebungen (16) besteht, wobei sich die Erhebungen (16) von einem Außendurchmesser D_{A} des ringförmigen Halteelements (2) aus in radialer Richtung erstrecken.

2. Wälzlagereinheit (1) nach Anspruch 1, wobei das Dichtelement (14) als Band ausgebildet ist und eine Ringform aufweist, wobei das Dichtelement (14) axial mittig auf dem Außendurchmesser D_{A} des Halteelements (2) angeordnet ist.

3. Wälzlagereinheit (1) nach einem der vorangehenden Ansprüche, wobei der Lagerinnenring (4) eine zur Schnappkontur (15) korrespondierende Kontur (17) aufweist.

4. Wälzlagereinheit (1) nach Anspruch 3, wobei das Anlageteil (9, 19) eine zur Schnappkontur (15) des Halteelements (2) korrespondierende Kontur (17) aufweist.

5. Wälzlagereinheit (1) nach einem der vorangehenden Ansprüche, wobei das Anlageteil (9, 19) als Anlagering (19) oder als Endkappe (9) ausgebildet ist.

6. Wälzlagereinheit (1) nach einem der Ansprüche 1 bis 5, wobei die Erhebungen (16) als Schnappnasen ausgebildet sind und die Schnappnasen an den beiden axialen Enden des Halteelements (2) in Umlaufrichtung versetzt angeordnet sind.

7. Wälzlagereinheit (1) nach einem der vorangehenden Ansprüche, wobei die Wälzkörper (6) in zwei Reihen angeordnet sind.

8. Wälzlagereinheit (1) nach einem der vorangehenden Ansprüche, wobei das Halteelement (2) aus Kunststoff, insbesondere PA66-GF25, besteht.

9. Wälzlagereinheit (1) nach Anspruch 8, wobei das Dichtelement (14) aus Naturkautschuk besteht.

10. Radsatzwelle (7) eines Schienenfahrzeugs mit einer Wälzlagereinheit (1) nach einem der vorangehenden Ansprüche, wobei zwei Halteelemente (2) auf der Radsatzwelle (7) angeordnet sind, und wobei jeweils ein Halteelement (2) an einem axialen Ende des ein- oder mehrteiligen Lagerinnenrings (4) angeordnet ist.

## Claims

1. Anti-friction bearing unit (1) for rail vehicles, comprising a single-piece or multiple-piece bearing inner ring (4), a bearing outer ring (5), rolling bodies (6) which are arranged between the bearing rings (4, 5), and at least one annular retaining element (2) with a constant width (B) of the retaining element (2) in the axial direction, the bearing inner ring (4) and the retaining element (2) being arranged on a wheelset shaft (7), and the retaining element (2) being arranged radially between an axial end of the bearing inner ring (4) and the wheelset shaft (7) and radially between a contact part (9, 19), which bears against the end side (12, 18) of the bearing inner ring (4), and the wheelset shaft (7), at least one sealing element (14) being fastened to the retaining element (2), the retaining element (2) and the sealing element (14) consisting of different materials, and the retaining element (2) having, at the two axial ends, a snap-in contour (15) which consists of a multiplicity of elevations (16), the elevations (16) extending in the radial direction from an external diameter D_{A} of the annular retaining element (2) .

2. Anti-friction bearing unit (1) according to Claim 1, the sealing element (14) being configured as a band and having an annular shape, the sealing element (14) being arranged axially centrally on the external diameter D_{A} of the retaining element (2).

3. Anti-friction bearing unit (1) according to either of the preceding claims, the bearing inner ring (4) having a contour (17) which corresponds to the snap-in contour (15).

4. Anti-friction bearing unit (1) according to Claim 3, the contact part (9, 19) having a contour (17) which corresponds to the snap-in contour (15) of the retaining element (2).

5. Anti-friction bearing unit (1) according to one of the preceding claims, the contact part (9, 19) being configured as a contact ring (19) or as an end cap (9).

6. Anti-friction bearing unit (1) according to one of Claims 1 to 5, the elevations (16) being configured as snap-in lugs, and the snap-in lugs being arranged offset in the circulation direction at the two axial ends of the retaining element (2).

7. Anti-friction bearing unit (1) according to one of the preceding claims, the rolling bodies (6) being arranged in two rows.

8. Anti-friction bearing unit (1) according to one of the preceding claims, the retaining element (2) consisting of plastic, in particular PA66-GF25.

9. Anti-friction bearing unit (1) according to Claim 8, the sealing element (14) consisting of natural rubber.

10. Wheelset shaft (7) of a rail vehicle having an anti-friction bearing unit (1) according to one of the preceding claims, two retaining elements (2) being arranged on the wheelset shaft (7), and in each case one retaining element (2) being arranged at an axial end of the single-piece or multiple-piece bearing inner ring (4) .

## Revendications

1. Unité de palier à roulement (1) pour véhicules ferroviaires, comprenant une bague de palier interne (4) en une ou plusieurs parties, une bague de palier externe (5), des corps de roulement (6) disposés entre les bagues de palier (4, 5) et au moins un élément de retenue annulaire (2), avec une largeur uniforme (B) de l'élément de retenue (2) dans la direction axiale, la bague de palier interne (4) et l'élément de retenue (2) étant disposés sur un arbre d'essieu monté (7) et l'élément de retenue (2) étant disposé radialement entre une extrémité axiale de la bague de palier interne (4) et l'arbre d'essieu monté (7), ainsi que radialement entre une partie d'appui (9, 19) s'appliquant contre le côté frontal (12, 18) de la bague de palier interne (4) et l'arbre d'essieu monté (7), au moins un élément d'étanchéité (14) étant fixé à l'élément de retenue (2), l'élément de retenue (2) et l'élément d'étanchéité (14) se composant de matériaux différents, et l'élément de retenue (2) présentant aux deux extrémités axiales un contour d'encliquetage (15) qui se compose d'une pluralité de rehaussements (16), les rehaussements (16) s'étendant dans la direction radiale à partir d'un diamètre extérieur D_{A} de l'élément de retenue annulaire (2).

2. Unité de palier à roulement (1) selon la revendication 1, dans laquelle l'élément d'étanchéité (14) est réalisé sous forme de bande et présente une forme annulaire, l'élément d'étanchéité (14) étant disposé axialement centralement sur le diamètre extérieur D_{A} de l'élément de retenue (2).

3. Unité de palier à roulement (1) selon l'une quelconque des revendications précédentes, dans laquelle la bague de palier interne (4) présente un contour (17) correspondant au contour d'encliquetage (15).

4. Unité de palier à roulement (1) selon la revendication 3, dans laquelle la partie d'appui (9, 19) présente un contour (17) correspondant au contour d'encliquetage (15) de l'élément de retenue (2).

5. Unité de palier à roulement (1) selon l'une quelconque des revendications précédentes, dans laquelle la partie d'appui (9, 19) est réalisée sous forme de bague d'appui (19) ou sous forme d'embout (9).

6. Unité de palier à roulement (1) selon l'une quelconque des revendications 1 à 5, dans laquelle les rehaussements (16) sont réalisés sous forme d'ergots d'encliquetage et les ergots d'encliquetage sont disposés de manière décalée dans la direction périphérique au niveau des deux extrémités axiales de l'élément de retenue (2).

7. Unité de palier à roulement (1) selon l'une quelconque des revendications précédentes, dans laquelle les corps de roulement (6) sont disposés en deux rangées.

8. Unité de palier à roulement (1) selon l'une quelconque des revendications précédentes, dans laquelle l'élément de retenue (2) se compose de plastique, en particulier de PA66-GF25.

9. Unité de palier à roulement (1) selon la revendication 8, dans laquelle l'élément d'étanchéité (14) se compose de caoutchouc naturel.

10. Arbre d'essieu monté (7) d'un véhicule ferroviaire comprenant une unité de palier à roulement (1) selon l'une quelconque des revendications précédentes, dans lequel deux éléments de retenue (2) sont disposés sur l'arbre d'essieu monté (7), et dans lequel à chaque fois un élément de retenue (2) est disposé au niveau d'une extrémité axiale de la bague de palier interne (4) réalisée en une ou plusieurs parties.
